# EUROPEAN PATENT APPLICATION

(11) **EP 4 592 145 A1**
(43) Date of publication of application: **30.07.2025**
(21) Application number: 23867606.8
(22) Date of filing: 21.09.2023
(51) Int. Cl.: B60R 13/08

(54) **VEHICLE PARTITION FRAME ASSEMBLY**

(30) Priority: 22.09.2022 CN 202211158485
(71) Applicant: Zhejiang Zeekr Intelligent Technology Co., Ltd, Ningbo, Zhejiang 315899 (CN); Zhejiang Geely Holding Group Co., Ltd., Hangzhou, Zhejiang 310051 (CN)
(72) Inventor: GU, Linlin, Ningbo, Zhejiang 315899 (CN); LI, Guolin, Ningbo, Zhejiang 315899 (CN); LI, Yihua, Ningbo, Zhejiang 315899 (CN); WANG, Jia, Ningbo, Zhejiang 315899 (CN); XU, Yun, Ningbo, Zhejiang 315899 (CN)
(74) Representative: Studio Torta S.p.A.
(86) International application number: PCT/CN2023/120447
(87) International publication number: WO 2024/061321

(57) **Abstract**

The present application discloses a vehicular partition frame assembly disposed between front and back seats of a vehicle, and including an upper plastic partition frame and a lower fixing and supporting frame, where the upper plastic partition frame and the lower fixing and supporting frame are detachably connected; the lower fixing and supporting frame is configured to be fixedly connected with a vehicular floor assembly, and the upper plastic partition frame is configured to be fixedly connected with a vehicular roof plate assembly; the upper plastic partition frame is provided with a glass guide rail mounting position, a glass regulation device mounting position and an audio-video device mounting position. In the present application, the partition frame assembly is provided in a separated type, which is more conducive for mounting and fixing in a limited space of the vehicle; moreover, the partition frame is provided with the glass guide rail mounting position, the glass regulation device mounting position and the audio-video device mounting position, and different devices are mounted at different mounting positions, so that not only an entertainment function for use on the vehicle is gained, but also the privacy between the front and the back of the vehicle is enhanced, thereby improving the user experience.

## Description

### TECHNICAL FIELD

The present application relates to the technical field of vehicular interior trimming and, in particular, to a vehicular partition frame assembly.

### BACKGROUND

With the continuous progress of the automobile industry, consumers have increasingly higher demands for the functions of automobiles. On the basis that an automobile meets the comfort and stability in a driving process, the automobile is also required to have privacy and entertainment functions in the space for back passengers, for example, adding the functions such as video, audio, air purification, inner window glass regulation, on-board refrigerators, etc. In existing vehicles, there is no partition structure disposed between the front and the back of a vehicle to improve the privacy and entertainment between the front and the back of the vehicle. Even if there may be a partition structure, existing partition structures are generally formed by connecting steel pipes, stampings and the like together by means of welding or bolts. In such a design, parts are relatively scattered, it is relatively difficult to ensure the precision of the mounting parts, the weight is relatively heavy, and the assembly and mounting are relatively difficult.

Accordingly, there is a need to provide an improved vehicular partition frame assembly to solve the above problems.

### SUMMARY

In order to solve the above problems in the prior art, the present application discloses a vehicular partition frame assembly, disposed between front and back seats of a vehicle, and including an upper plastic partition frame and a lower fixing and supporting frame, where the upper plastic partition frame and the lower fixing and supporting frame are detachably connected; the lower fixing and supporting frame is configured to be fixedly connected with a vehicular floor assembly, and the upper plastic partition frame is configured to be fixedly connected with a vehicular roof plate assembly; the upper plastic partition frame is provided with a glass guide rail mounting position, a glass regulation device mounting position and an audio-video device mounting position.

Further, the upper plastic partition frame is injection molded.

Further, the upper plastic partition frame includes a first crossbeam, the first crossbeam is provided with a roof cover mounting hole, and the upper plastic partition frame is fixedly connected with a vehicular roof plate through the roof cover mounting hole.

Further, the upper plastic partition frame further includes a second crossbeam, a first longitudinal beam and a second longitudinal beam; the first crossbeam is fixedly connected with the first longitudinal beam and the second longitudinal beam respectively; the second crossbeam is fixedly connected with the first longitudinal beam and the second longitudinal beam respectively; the second crossbeam, the first longitudinal beam, the second longitudinal beam and the first crossbeam enclose to form the glass guide rail mounting position; a sealing structure is fixedly disposed on the glass guide rail mounting position.

Further, the first longitudinal beam is provided with an upper left B-pillar connection position, and the second longitudinal beam is provided with an upper right B-pillar connection position; the upper left B-pillar connection position is used for fixed connection with a vehicular upper left B-pillar connection plate, and the upper right B-pillar connection position is used for fixed connection with the vehicular lower right B-pillar connection plate.

Further, the upper plastic partition frame further includes a third crossbeam and a fourth crossbeam, and the third crossbeam and the fourth crossbeam are disposed in sequence along a height direction of a vehicular body; the third crossbeam and the fourth crossbeam are provided with the audio-video device mounting position, and the audio-video device mounting position is used for fixed connection with a vehicular audio-video device.

Further, the upper plastic partition frame further includes a reinforcing rib and a support beam; both ends of the reinforcing rib are fixedly connected to the support beam, the third crossbeam or the fourth crossbeam respectively, and both ends of the support beam are fixedly connected to the third crossbeam and the fourth crossbeam respectively; the glass regulation device mounting position is disposed on the reinforcing rib, and the glass regulation device mounting position is used for fixed connection with a glass regulation device.

Further, the upper plastic partition frame further includes a fifth crossbeam disposed below the fourth crossbeam along the height direction of the vehicular body, and the lower fixing and supporting frame includes a connecting crossbeam; both ends of the fifth crossbeam are fixedly connected to the first longitudinal beam and the second longitudinal beam respectively, and the fifth crossbeam is provided with a plurality of mounting holes; the connecting crossbeam is provided with connecting holes matched with the mounting holes, and the upper plastic partition frame can be fixedly connected with the lower fixing and supporting frame through the matching of the mounting holes and the connecting holes.

Further, the lower fixing and supporting frame includes a first fixing and supporting member and a second fixing and supporting member; one end of the first fixing and supporting member is fixedly connected to the connecting crossbeam, the other end of the first fixing and supporting member is configured to be fixedly connected to the floor assembly; one end of the second fixing and supporting member is fixedly connected to the connecting crossbeam, the other end of the second fixing and supporting member is configured to be fixedly connected to the floor assembly; the first fixing and supporting member is provided with a lower left B-pillar connection position, and the second fixing and supporting member is provided with a lower right B-pillar connection position; the lower left B-pillar connection position is used for fixed connection with a vehicular lower left B-pillar connection plate, and the lower right B-pillar connection position is used for fixed connection with a vehicular lower right B-pillar connection plate.

Further, the lower fixing and supporting frame further includes a third fixing and supporting member, a fourth fixing and supporting member and a plurality of adjusting and connecting brackets; the adjusting and connecting bracket is provided with an adjusting portion and a connecting portion, the connecting portion is configured to be fixedly connected with the floor assembly, and the adjusting portion is configured to be matched with the first fixing and supporting member, the second fixing and supporting member, the third fixing and supporting member or the fourth fixing and supporting member; and the adjusting and connecting bracket is used for connecting the lower fixing and supporting frame with the floor assembly.

In the present application, the partition frame assembly is provided in a separated type, which is more conducive for mounting and fixing in a limited space of a vehicle. Moreover, the upper plastic partition frame is integrally injection molded, ensuring the position accuracy of the glass guide rail mounting position, the glass regulation device mounting position and the audio-video device mounting position disposed on the partition frame, and ensuring the connection strength of different mounting positions with different devices, improving the connection reliability among devices, adding the entertainment function of the vehicle while enhancing the privacy between the front and the back of the vehicle, thereby improving the user experience.

### BRIEF DESCRIPTION OF DRAWINGS

In order to explain the technical solutions and advantages of embodiments of the present application or the prior art more clearly, the following will make a brief introduction to the drawings needed for the description of the embodiments or the prior art. Apparently, the drawings in the following description are merely a part of embodiments of the present application. For persons of ordinary skill in the art, it is also possible to obtain other drawings from these drawings without creative effort.
FIG. 1 is a schematic view of an overall structure of a vehicular partition frame assembly according to an embodiment of the present application.
FIG. 2 is an exploded view of a vehicular partition frame assembly according to an embodiment of the present application.
FIG. 3 is a schematic structural view of an adjusting and connecting bracket according to an embodiment of the present application.
FIG. 4 is a force analysis view of a vehicular partition frame assembly according to an embodiment of the present application.
FIG. 5 is a force analysis view of an existing vehicle according to an embodiment of the present application.

In the drawings: 1-upper plastic partition frame; 2-lower fixing and supporting frame; 3-vehicular upper left B-pillar connection plate; 4-vehicular lower right B-pillar connection plate; 5-vehicular lower left B-pillar connection plate; 6-vehicular lower right B-pillar connection plate; 11-glass guide rail mounting position; 12-glass regulation device mounting position; 13-audio-video device mounting position; 14-first crossbeam; 15-second crossbeam; 16-first longitudinal beam; 17-second longitudinal beam; 18-third crossbeam; 19-fourth crossbeam; 20-reinforcing rib; 21-support beam; 22-fifth crossbeam; 23-connecting crossbeam; 24-first fixing and supporting member; 25-second fixing and supporting member; 26-third fixing and supporting member; 27-fourth fixing and supporting member; 28-adjusting and connecting bracket; 26-first support crossbeam; 27-second support crossbeam; 281-adjusting portion; 282-connecting portion; F-side impact force; F1 and F2: primary component forces; F1-1, F2-1 and F11-F15: secondary component forces.

### DESCRIPTION OF EMBODIMENTS

The following clearly and comprehensively describes the technical solutions in embodiments of the present application with reference to the accompanying drawings in embodiments of the present application. Apparently, the described embodiments are merely a part of rather than all embodiments of the present application. All other embodiments obtained by persons of ordinary skill in the art based on embodiments of the present application without creative effort belong to the protection scope of the present application.

It should be noted that the terms "first", "second" and the like in the specification, claims and the foregoing drawings of the present application are used to distinguish between similar objects and need not be used to describe a particular order or sequence. It should be understood that the data used in this way is interchangeable under appropriate circumstances, so that the embodiments of the present application described herein may be implemented in an order other than those illustrated or described herein. In addition, the terms "include", "have" as well as any variations thereof, are intended to cover non-exclusive inclusions. For example, processes, methods, apparatuses, products or devices, which include a series of steps or units, need not be limited to those steps or units clearly listed, but may include other steps or units that are not clearly listed or are inherent to such processes, methods, products or devices.

Embodiments are described below with reference to the accompanying drawings, which do not limit the application content as set forth in the claims in any way.

In the description of embodiments of the present invention, it should be understood that the terms "up", "down", "front", "back", "left", "right", "inner", "outer", etc., indicate the orientation or positional relationship based on the orientation or positional relationship shown in the drawings, which is merely intended to facilitate the description of the present invention, and is not intended to indicate or imply that the devices or elements referred to must have a specific orientation, or be constructed or operated in a specific orientation, and therefore, should not be construed as a limitation of the present invention.

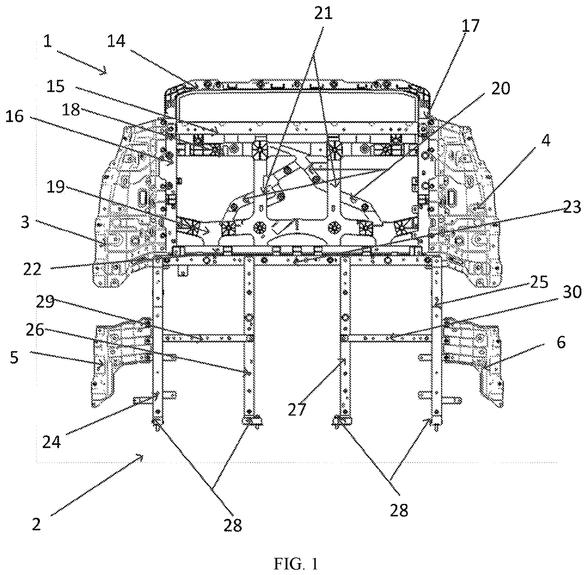

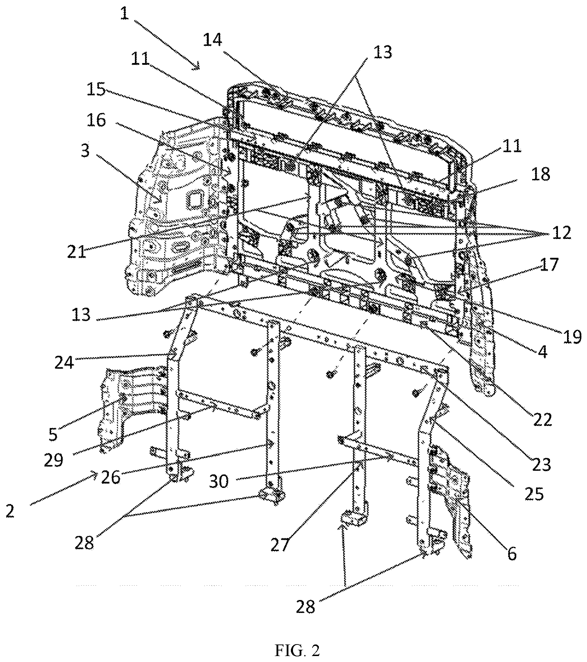

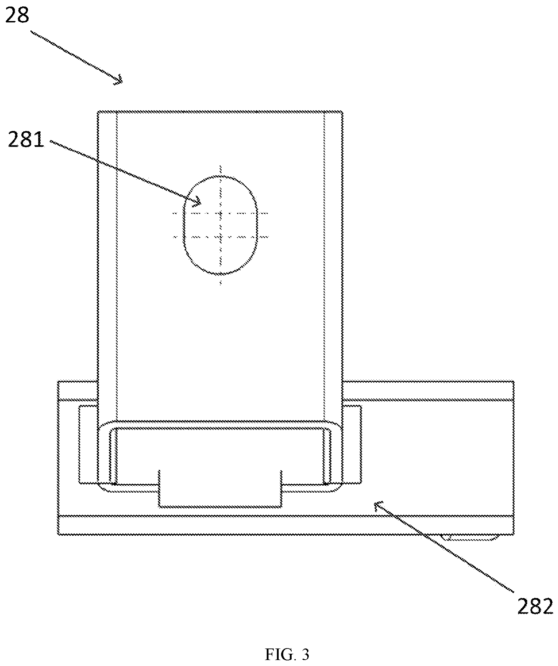

Referring to FIGS. 1-5, the embodiments of the present application provide a vehicular partition frame assembly, disposed between front and back seats of a vehicle, and including an upper plastic partition frame 1 and a lower fixing and supporting frame 2, where the upper plastic partition frame 1 and the lower fixing and supporting frame 2 are detachably connected; the lower fixing and supporting frame 2 is configured to be fixedly connected with a vehicular floor assembly, and the upper plastic partition frame 1 is configured to be fixedly connected with a vehicular roof plate assembly; the upper plastic partition frame 1 is provided with a glass guide rail mounting position 11, a glass regulation device mounting position 12 and an audio-video device mounting position 13.

With this arrangement, the partition frame assembly is provided in a separated type, which is more conducive for mounting and fixing in a limited space of a vehicle. Moreover, the partition frame is provided with the glass guide rail mounting position, the glass regulation device mounting position and the audio-video device mounting position, and different devices are mounted at different mounting positions, so that not only an entertainment function for use on the vehicle is gained, but also the privacy between the front and the back of the vehicle is enhanced, thereby improving the user experience.

In some embodiments, the upper plastic partition frame 1 is injection molded.

In these embodiments, the upper plastic partition frame 1 is integrally injection molded, so that the upper plastic partition frame 1 has a more compact structure and is lightweight in a limited space, improving the position accuracy of the glass guide rail mounting position 11, the glass regulation device mounting position 12 and the audio-video device mounting position 13 disposed on the partition frame, improving the connection strength and assembly accuracy of different mounting positions with different devices, and improving the connection reliability among devices.

In some embodiments, the upper plastic partition frame 1 includes a first crossbeam 14, the first crossbeam 14 is provided with a roof cover mounting hole, and the upper plastic partition frame 1 is fixedly connected with a vehicular roof plate through the roof cover mounting hole.

Specifically, the vehicular roof plate is provided with a connecting frame which is fixedly connected with the upper plastic partition frame through the roof cover mounting hole.

In some embodiments, the upper plastic partition frame 1 further includes a second crossbeam 15, a first longitudinal beam 16 and a second longitudinal beam 17. The crossbeam 14 is fixedly connected with the first longitudinal beam 16 and the second longitudinal beam 17 respectively. The second crossbeam 15 is fixedly connected with the first longitudinal beam 16 and the second longitudinal beam 17 respectively. The second crossbeam 15, the first longitudinal beam 16, the second longitudinal beam 17 and the first crossbeam 14 enclose to form the glass guide rail mounting position 11. A sealing structure is fixedly disposed on the glass guide rail mounting position 11.

Specifically, the glass guide rail mounting position 11 may be a glass guide channel.

Specifically, the sealing structure may be a rubber sealing strip, which is disposed on the circumference of the glass guide rail mounting position. Providing the sealing strip can not only play an aesthetic role, but also prevent water droplets, dust and the like on the glass surface from entering into the interior of the partition frame to affect the lifting of the glass, when lifting the window glass.

Specifically, the upper plastic partition frame 1 may be connected with the vehicular roof plate through bolts.

In some embodiments, the first longitudinal beam 16 is provided with an upper left B-pillar connection position, and the second longitudinal beam 17 is provided with an upper right B-pillar connection position. The upper left B-pillar connection position is used for fixed connection with a vehicular upper left B-pillar connection plate 3, and the upper right B-pillar connection position is used for fixed connection with the vehicular lower right B-pillar connection plate 4.

Specifically, the upper left B-pillar connection position is provided with a connecting hole, and a corresponding position of the vehicular upper left B-pillar connection plate 3 is also provided with a hole matched with the connecting hole.

Specifically, the vehicular upper left B-pillar connection plate 3 may be in bolted connection with the upper left B-pillar connection position.

Specifically, the vehicular upper left B-pillar connection plate 3 is configured to be fixedly connected with a left B-pillar of the vehicle, and the vehicular upper left B-pillar connection plate 3 may be welded to or threadedly connected with the left B-pillar of the vehicle.

Similarly, the upper right B-pillar connection position is provided with a connecting hole, and a corresponding position of the vehicular upper right B-pillar connection plate 4 is also provided with a hole matched with the connecting hole. The vehicular upper right B-pillar connection plate 4 may be in bolted connection with the upper right B-pillar connection position. The vehicular upper right B-pillar connection plate 4 is configured to be fixedly connected with a right B-pillar of the vehicle, and the vehicular upper right B-pillar connection plate 4 may be welded to or threadedly connected with the right B-pillar of the vehicle.

In these embodiments, the upper left B-pillar connection position is used for fixed connection with the vehicular upper left B-pillar connection plate 3, and the upper right B-pillar connection position is used for fixed connection with the vehicular upper right B-pillar connection plate 4, improving the stability of the fixed connection between the upper plastic partition frame 1 and the left and right B-pillars of the vehicle.

In some embodiments, the upper plastic partition frame 1 further includes a third crossbeam 18 and a fourth crossbeam 19, and the third crossbeam 18 and the fourth crossbeam 19 are disposed in sequence along a height direction of a vehicular body. The third crossbeam 18 and the fourth crossbeam 19 are provided with the audio-video device mounting position 13, and the audio-video device mounting position 13 is used for fixed connection with a vehicular audio-video device.

Specifically, both ends of the third crossbeam 18 are respectively fixedly connected to the first longitudinal beam 16 and the second longitudinal beam 17. Both ends of the fourth crossbeam 19 are fixedly connected to the first longitudinal beam 16 and the second longitudinal beam 17 respectively.

Specifically, the audio-video device mounting position 13 may be used for fixed connection with the vehicular audio-video device through bolts.

Specifically, the vehicular audio-video device may be a television.

In these embodiments, the third crossbeam 18 and the fourth crossbeam 19 are provided with the audio-video device mounting position 13, which is capable of improving the mounting accuracy of the vehicular audio-video device, providing entertainment facilities for rear passengers, and improving the user experience.

In some embodiments, the upper plastic partition frame 1 further includes a reinforcing rib 20 and a support beam 21. Both ends of the reinforcing rib 20 are fixedly connected to the support beam 21, the third crossbeam 18 or the fourth crossbeam 19 respectively. Both ends of the support beam 21 are fixedly connected with the third crossbeam 18 and the fourth crossbeam 19 respectively. The glass regulation device mounting position 12 is disposed on the reinforcing rib 20, and the glass regulation device mounting position 12 is used for fixed connection with a glass regulation device.

Specifically, the support beam 21 is disposed on the upper plastic partition frame 1, enhancing the support strength of the third crossbeam 18 and the fourth crossbeam 19, thereby improving the overall structural strength and further enhancing the mounting stability of the vehicular audio-video device.

Specifically, the glass regulation device mounting position 12 may be used for fixed connection with the glass regulation device through bolts.

Specifically, the glass regulation device is used for driving the window glass to move up and down along a glass guide rail.

In these embodiments, by adding the glass regulation device mounting position 12, the requirement of the glass regulation device for the mounting position is improved, which in turn enables the window glass to move up and down smoothly along the glass guide rail, providing a private space for the back passengers.

In some embodiments, the upper plastic partition frame 1 further includes a fifth crossbeam 22 disposed below the fourth crossbeam 19 along the height direction of the vehicular body. The lower fixing and supporting frame 2 includes a connecting crossbeam 23. Both ends of the fifth crossbeam 22 are fixedly connected to the first longitudinal beam 16 and the second longitudinal beam 17 respectively, and the fifth crossbeam 22 is fixedly connected with the connecting crossbeam 23.

Specifically, the fifth crossbeam 22 is provided with a plurality of mounting holes, and the connecting crossbeam 23 is provided with connecting holes matched with the mounting holes, so that the upper plastic partition frame 1 can be fixedly connected with the lower fixing and supporting frame 2 through the matching of the mounting holes and the connecting holes.

Specifically, the upper plastic partition frame 1 may be fixedly connected with the lower fixing and supporting frame 2 through bolts.

In other embodiments, the fifth crossbeam 22 and the connecting crossbeam 23 are provided with at least two back airbag mounting positions for fixed connection with an airbag device.

In these embodiments, by providing the back airbag mounting positions, the precision of installation positions of the airbag device is improved, so that the safety of rear passengers can be ensured and the heads of the passengers can be prevented from contacting with hard parts such as a television and the like when a frontal collision, a 50% offset collision or a small offset collision occurs to the vehicle, thereby improving the safety performance of the vehicle.

In some embodiments, the lower fixing and supporting frame 2 includes a first fixing and supporting member 24 and a second fixing and supporting member 25. One end of the first fixing and supporting member 24 is fixedly connected to the connecting crossbeam 23, and the other end of the first fixing and supporting member 24 is configured to be fixedly connected to the floor assembly. One end of the second fixing and supporting member 25 is fixedly connected to the connecting crossbeam 23, and the other end of the second fixing and supporting member 25 is configured to be fixedly connected with the floor assembly. The first fixing and supporting member 24 is provided with a lower left B-pillar connection position, and the second fixing and supporting member 25 is provided with a lower right B-pillar connection position. The lower left B-pillar connection position is used for fixed connection with a vehicular lower left B-pillar connection plate 5, and the lower right B-pillar connection position is used for fixed connection with a vehicular lower right B-pillar connection plate 6.

Specifically, the lower fixing and supporting frame 2 may be a steel member, which can enhance the support strength of the lower fixing and supporting frame 2 to the upper plastic partition frame 1.

Specifically, the first fixing and supporting member 24 may be fixedly connected with the connecting crossbeam 23 by means of bolts or welding, and the second fixing and supporting member 25 may be fixedly connected with the connecting crossbeam 23 by means of bolts or welding.

Specifically, the lower left B-pillar connection position may be used for fixed connection with the vehicular lower left B-pillar connection plate 5 by means of bolts or welding, and the lower right B-pillar connection position may be used for fixed connection with the vehicular lower right B-pillar connection plate 6 by means of bolts or welding.

In these embodiments, through the fixed connection for use on the lower left B-pillar connection position with the vehicular lower left B-pillar connection plate 5 and the fixed connection for use on the lower right B-pillar connection position with the vehicular lower right B-pillar connection plate 6, the installation stability of the lower fixing and supporting frame 2 can be further improved.

In some embodiments, the lower fixing and supporting frame 2 further includes a plurality of adjusting and connecting brackets 28. The adjusting and connecting bracket 28 is provided with an adjusting portion 281 and a connecting portion 282. The connecting portion 282 is configured to be fixedly connected with the floor assembly, and the adjusting portion 281 is configured to be fixedly connected with the first fixing and supporting member 22 and the second fixing and supporting member 25.

Specifically, the adjusting portion 281 of the adjusting and connecting bracket 28 is provided with an adjusting hole, and the first fixing and supporting member 22 and the second fixing and supporting member 25 are provided with a connecting hole matched with the adjusting hole.

Specifically, the adjusting portion 281 may be fixedly connected to the first fixing and supporting member 22 and the second fixing and supporting member 25 through bolts.

Specifically, the connecting portion 282 is provided with a waist-shaped hole, and the connecting portion 282 may be fixedly connected with the floor assembly through bolts.

In these embodiments, the lower fixing and supporting frame 2 is connected with the floor assembly through the adjusting and connecting bracket 28, and a height at which the first fixing and supporting member 22 and the second fixing and supporting member 25 are connected with the floor assembly can be adjusted by the adjusting portion 281, thereby facilitating the installation of the lower fixing and supporting frame 2 in a limited space.

In other embodiments, the lower fixing and supporting frame 2 further includes a third fixing and supporting member 26, a fourth fixing and supporting member 27, a first support crossbeam 29 and a second support crossbeam 30. One end of the third fixing and supporting member 26 is fixedly connected to the connecting crossbeam 23, and the other end of the third fixing and supporting member 26 is fixedly connected to the floor assembly. One end of the fourth fixing and supporting member 27 is fixedly connected to the connecting crossbeam 23, and the other end of the fourth fixing and supporting member 27 is fixedly connected to the floor assembly. Both ends of the first support crossbeam 29 are fixedly connected to the first fixing and supporting member 22 and the third fixing and supporting member 26 respectively. Both ends of the second support crossbeam 30 are fixedly connected to the second fixing and supporting member 25 and the fourth fixing and supporting member 27 respectively.

In these embodiments, providing the third fixing and supporting member 26, the fourth fixing and supporting member 27, the first support crossbeam 29 and the second support crossbeam 30 can further improve the connection strength of the lower fixing and supporting frame 2 and the stability of the fixed connection with the floor assembly.

In other embodiments, the lower fixing and supporting frame 2 is provided with a storage box mounting position, an on-board refrigerator mounting position, an air purification device mounting position and the like, which can provide richer functional experience for back passengers.

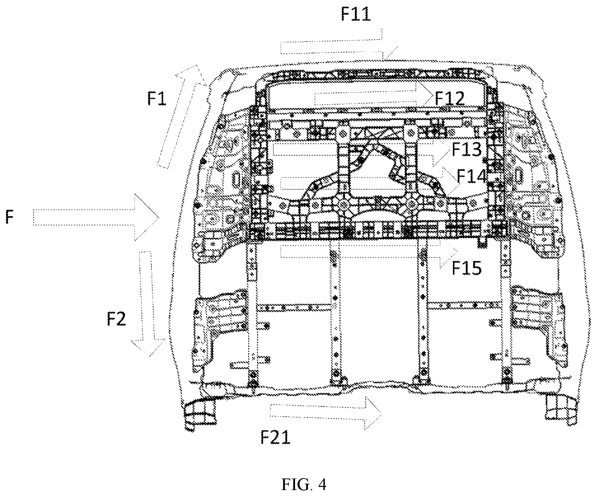

Referring to FIG. 4, this embodiment provides an analysis process of force transmission paths of a partition frame assembly of a vehicle after the vehicle is subjected to a side impact force, and the details are as follows.

In the middle of the vehicular body, when a position close to the partition frame assembly is impacted by a side impact force F from the outside, the side impact force F will be distributed upward along the B-pillar of the vehicular body as F1 to the first crossbeam 14 as F11, the second crossbeam 15 as F12, the third crossbeam 18 as F13, the fourth crossbeam 19 as F14, and the fifth crossbeam 22 as F15 on the upper plastic partition frame 1. The side impact force will be distributed downward long the B-pillar of the vehicular body to the lower fixing and supporting frame 2 as F21 and to the floor assembly.

The concentrated side impact force is distributed along the partition frame assembly in the form of a plurality of transverse component forces, thereby reducing the level of damage of the side impact force to the vehicle, and improving the capability of protection for passengers in the vehicle.

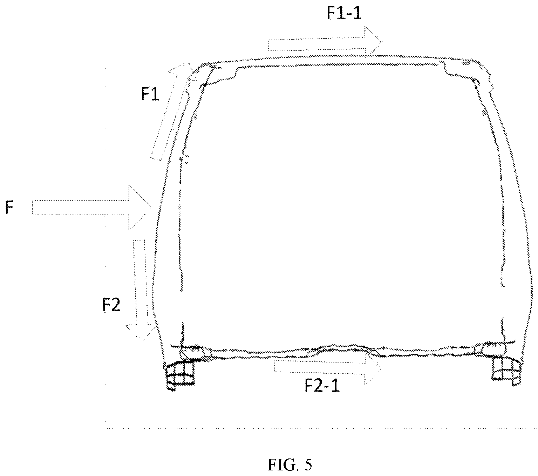

Referring to FIG. 5, this embodiment provides an analysis process of force transmission paths of a vehicle without a partition frame assembly after the vehicle is subjected to a side impact force, and the details are as follows.

In the middle of the vehicular body, when a position close to the partition frame assembly is impacted by a side impact force F from the outside, the side impact force F will be distributed upward along the B-pillar of vehicular body as F1 to a vehicular roof cover beam as F1-1. The side impact force will be distributed downward along the B-pillar of the vehicular body as F2 to a beam of a seat on the floor as F2-1.

The concentrated side impact force is distributed in the form of two transverse component forces. Compared with the force scenario of the vehicle with the partition frame assembly, the side impact force has fewer force transmission paths, so that the level of damage to the vehicle is greater, and the capability of protection for passengers in the vehicle is less.

### Example 1

Referring to FIGS. 1-5, embodiments of the present application provide a vehicular partition frame assembly, disposed between front and back seats of a vehicle, and including an upper plastic partition frame 1 and a lower fixing and supporting frame 2, where the upper plastic partition frame 1 and the lower fixing and supporting frame 2 are detachably connected; the lower fixing and supporting frame 2 is configured to be fixedly connected with a vehicular floor assembly, and the upper plastic partition frame 1 is configured to be fixedly connected with a vehicular roof plate assembly; the upper plastic partition frame 1 is provided with a glass guide rail mounting position 11, a glass regulation device mounting position 12 and an audio-video device mounting position 13.

The upper plastic partition frame 1 is provided with a first crossbeam 14, a second crossbeam 15, a first longitudinal beam 16 and a second longitudinal beam 17.

The first crossbeam 14 and the second crossbeam 15 are disposed in sequence along the height direction of the vehicle. The first crossbeam 14 is fixedly connected with the vehicular roof plate. The first crossbeam 14 is fixedly connected with the first longitudinal beam 16 and the second longitudinal beam 17 respectively. The second crossbeam 15 is fixedly connected with the first longitudinal beam 16 and the second longitudinal beam 17 respectively.

The second crossbeam 15, the first longitudinal beam 16, the second longitudinal beam 17 and the first crossbeam 14 enclose to form a glass guide channel. A glass weatherstrip is provided along the circumference of the glass guide channel to prevent water droplets, dust, etc., on the glass surface from entering into the interior of the partition frame.

The upper plastic partition frame 1 is further provided with a third crossbeam 18 and a fourth crossbeam 19, and the third crossbeam 18 and the fourth crossbeam 19 are disposed in sequence along a height direction of a vehicular body. The third crossbeam 18 and the fourth crossbeam 19 are provided with the audio-video device mounting position 13, and the audio-video device mounting position 13 is used for fixed connection with an on-board television.

The third crossbeam 18 and the fourth crossbeam 19 are provided with a mounting hole position for the on-board television, and the on-board television and the mounting hole position for the on-board television may be fixedly connected through bolts.

The upper plastic partition frame 1 is further provided with a reinforcing rib 20 and a support beam 21. Both ends of the reinforcing rib 20 are fixedly connected to the support beam 21, the third crossbeam 18 or the fourth crossbeam 19 respectively. Both ends of the support beam 21 are fixedly connected to the third crossbeam 18 and the fourth crossbeam 19 respectively. The reinforcing rib 20 is provided with the glass regulation device mounting hole, and a glass regulator is fixedly connected with the glass regulation device mounting hole through bolts.

The upper plastic partition frame 1 is further provided with a fifth crossbeam 22, and the fifth crossbeam 22 is provided with a connecting hole for fixed connection with the connecting crossbeam 23 of the lower fixing and supporting frame 2.

The upper plastic partition frame 1 is integrally injection molded, so that the structure of the vehicular partition frame assembly is more compact, meeting the installation requirements in a limited space, and improving the connection strength and the installation position precision of the upper plastic partition frame 1.

The lower fixing and supporting frame 2 may be a steel member, which can enhance the support strength of the lower fixing and supporting frame 2 to the upper plastic partition frame 1, thereby improving the stability of the vehicular partition frame assembly.

The lower fixing and supporting frame 2 is provided with a first fixing and supporting member 24, a second fixing and supporting member 25, a third fixing and supporting member 26, a fourth fixing and supporting member 27, a first support crossbeam 29, a second support crossbeam 30, and a plurality of adjusting and connecting brackets 28.

The first fixing and supporting member 24, the third fixing and supporting member 26, the fourth fixing and supporting member 27 and the second fixing and supporting member 25 are disposed in sequence along a width direction of the vehicular body. One end of each of the first fixing and supporting member 24, the third fixing and supporting member 26, the fourth fixing and supporting member 27 and the second fixing and supporting member 25 is fixedly connected to the connecting crossbeam 23. The other end of each of the first fixing and supporting member 24, the third fixing and supporting member 26, the fourth fixing and supporting member 27 and the second fixing and supporting member 25 is fixedly connected to the adjusting portion 281 of the adjusting and connecting bracket 28. The connecting portion 282 of the adjusting and connecting bracket 28 is fixedly connected with the floor assembly.

By adjusting the connection positions of the adjusting and connecting brackets 28 and the corresponding support members, the installation height of the corresponding support members is adjusted, which is more convenient for the installation of the vehicular partition frame assembly in a limited space.

Both ends of the first support crossbeam 29 are fixedly connected to the first fixing and supporting member 24 and the third fixing and supporting member 26 respectively. Both ends of the second support crossbeam 30 are fixedly connected to the fourth fixing and supporting member 27 and the second fixing and supporting member 25 respectively.

The first longitudinal beam 16 of the upper plastic partition frame 1 is provided with an upper left B-pillar connection position, and the second longitudinal beam 17 of the upper plastic partition frame 1 is provided with an upper right B-pillar connection position. The first fixing and supporting member 24 of the lower fixing and supporting frame 2 is provided with a lower left B-pillar connection position, and the second fixing and supporting member 25 of the lower fixing and supporting frame 2 is provided with a lower right B-pillar connection position.

The upper left B-pillar connection position is used for fixed connection with the vehicular upper left B-pillar connection plate 3. The lower right B-pillar connection position is used for fixed connection with the vehicular upper right B-pillar connection plate 4. The lower left B-pillar connection position is used for fixed connection with the vehicular lower left B-pillar connection plate 5. The lower right B-pillar connection position is used for fixed connection with the vehicular lower right B-pillar connection plate 6.

Securing of the vehicular partition frame assembly along the width direction of the vehicular body is accomplished by fixedly connecting the respective vehicular B-pillar connection plates to the left or right B-pillar of the vehicle.

A rotary positioning device provided by the present application at least has the following beneficial effects.
1. According to the present application, the partition frame assembly is provided in a separated type, which is more conducive for mounting and fixing in a limited space of a vehicle.
2. According to the present application, the partition frame is provided with the glass guide rail mounting position, the glass regulation device mounting position and the audio-video device mounting position, and different devices are mounted at different mounting positions, so that not only an entertainment function for use on the vehicle is gained, but also the privacy between the front and the back of the vehicle is enhanced, thereby improving the user experience.
3. According to the present application, the upper plastic partition frame is integrally injection molded, so that the structure of the vehicular partition frame assembly is more compact, meeting the installation requirements in a limited space, and improving the connection strength and the installation position precision of the upper plastic partition frame 1.
4. According to the present application, by providing the adjusting and connecting bracket 28 and adjusting the connection position of the adjusting and connecting bracket 28 and the corresponding support member, the installation height of the corresponding support member is adjusted, which is more convenient for the installation of the vehicular partition frame assembly in a limited space. The connection position of the corresponding support member, the installation height of the corresponding support member is adjusted, which is more convenient for the installation of the vehicular partition frame assembly in a limited space.

The embodiments in this specification are described in a progressive manner. Cross reference can be made to the embodiments for the same and similar parts therebetween, and each embodiment focuses on the differences from other embodiments.

It should be noted that all the features recorded in the present application (including the technical features recorded in different embodiments) can be combined arbitrarily under reasonable circumstances, and the new technical solutions formed by such combination are all within the protection scope of the present application.

The above description is merely for preferred embodiments of the present application, and is not intended to limit the present application. Any modifications, equivalent substitutions, improvement, etc. made within the spirit and principle of the present application shall be included in the protection scope of the present application.

## Claims

1. A vehicular partition frame assembly, disposed between front and back seats of a vehicle, and comprising an upper plastic partition frame (1) and a lower fixing and supporting frame (2), wherein the upper plastic partition frame (1) and the lower fixing and supporting frame (2) are detachably connected;
the lower fixing and supporting frame (2) is configured to be fixedly connected with a vehicular floor assembly, and the upper plastic partition frame (1) is configured to be fixedly connected with a vehicular roof plate assembly;
the upper plastic partition frame (1) is provided with a glass guide rail mounting position (11), a glass regulation device mounting position (12) and an audio-video device mounting position (13).

2. The vehicular partition frame assembly according to claim 1, wherein the upper plastic partition frame (1) is injection molded.

3. The vehicular partition frame assembly according to claim 1 or 2, wherein the upper plastic partition frame (1) comprises a first crossbeam (14), the first crossbeam (14) is provided with a roof cover mounting hole, and the upper plastic partition frame (1) is fixedly connected with a vehicular roof plate through the roof cover mounting hole.

4. The vehicular partition frame assembly according to claim 3, wherein the upper plastic partition frame (1) further comprises a second crossbeam (15), a first longitudinal beam (16) and a second longitudinal beam (17);
the first crossbeam (14) is fixedly connected with the first longitudinal beam (16) and the second longitudinal beam (17) respectively;
the second crossbeam (15) is fixedly connected with the first longitudinal beam (16) and the second longitudinal beam (17) respectively;
the second crossbeam (15), the first longitudinal beam (16), the second longitudinal beam (17) and the first crossbeam (14) enclose to form the glass guide rail mounting position (11);
a sealing structure is fixedly disposed on the glass guide rail mounting position (11).

5. The vehicular partition frame assembly according to claim 4, wherein the first longitudinal beam (16) is provided with an upper left B-pillar connection position, and the second longitudinal beam (17) is provided with an upper right B-pillar connection position;
the upper left B-pillar connection position is used for fixed connection with a vehicular upper left B-pillar connection plate (3), and the upper right B-pillar connection position is used for fixed connection with a vehicular lower right B-pillar connection plate (4).

6. The vehicular partition frame assembly according to claim 1 or 2, wherein the upper plastic partition frame (1) further comprises a third crossbeam (18) and a fourth crossbeam (19), and the third crossbeam (18) and the fourth crossbeam (19) are disposed in sequence along a height direction of a vehicular body;
the third crossbeam (18) and the fourth crossbeam (19) are provided with the audio-video device mounting position (13), and the audio-video device mounting position (13) is used for fixed connection with a vehicular audio-video device.

7. The vehicular partition frame assembly according to claim 6, wherein the upper plastic partition frame (1) further comprises a reinforcing rib (20) and a support beam (21);
both ends of the reinforcing rib (20) are fixedly connected to the support beam (21), the third crossbeam (18) or the fourth crossbeam (19) respectively, and both ends of the support beam (21) are fixedly connected to the third crossbeam (18) and the fourth crossbeam (19) respectively;
the glass regulation device mounting position (12) is disposed on the reinforcing rib (20), and the glass regulation device mounting position (12) is used for fixed connection with a glass regulation device.

8. The vehicular partition frame assembly according to claim 7, wherein the upper plastic partition frame (1) further comprises a fifth crossbeam (22) disposed below the fourth crossbeam (19) along the height direction of the vehicular body, and the lower fixing and supporting frame (2) comprises a connecting crossbeam (23);
both ends of the fifth crossbeam (22) are fixedly connected to the first longitudinal beam (16) and the second longitudinal beam (17) respectively, and the fifth crossbeam (22) is fixedly connected with the connecting crossbeam (23).

9. The vehicular partition frame assembly according to claim 8, wherein the lower fixing and supporting frame (2) comprises a first fixing and supporting member (24) and a second fixing and supporting member (25);
one end of the first fixing and supporting member (24) is fixedly connected to the connecting crossbeam (23), the other end of the first fixing and supporting member (24) is configured to be fixedly connected to the floor assembly; one end of the second fixing and supporting member (25) is fixedly connected to the connecting crossbeam (23), the other end of the second fixing and supporting member (25) is configured to be fixedly connected to the floor assembly;
the first fixing and supporting member (24) is provided with a lower left B-pillar connection position, and the second fixing and supporting member (25) is provided with a lower right B-pillar connection position;
the lower left B-pillar connection position is used for fixed connection with a vehicular lower left B-pillar connection plate (5), and the lower right B-pillar connection position is used for fixed connection with a vehicular lower right B-pillar connection plate (6).

10. The vehicular partition frame assembly according to claim 9, wherein the lower fixing and supporting frame (2) further comprises a plurality of adjusting and connecting brackets (28);
the adjusting and connecting bracket (28) is provided with an adjusting portion (281) and a connecting portion (282), the connecting portion (282) is configured to be fixedly connected with the floor assembly, and the adjusting portion (281) is configured to be fixedly connected with the first fixing and supporting member (22) and the second fixing and supporting member (25).
